(19) **Europäisches Patentamt**
**European Patent Office**
**Office européen des brevets**

(11) **EP 1 637 945 B1**

(12) **EUROPÄISCHE PATENTSCHRIFT**

(45) Veröffentlichungstag und Bekanntmachung des Hinweises auf die Patenterteilung:
**20.08.2008 Patentblatt 2008/34**

(51) Int Cl.:
***G05B 19/05*** *(2006.01)*

(21) Anmeldenummer: **04022105.3**

(22) Anmeldetag: **16.09.2004**

(54) **Automatisierungssystem mit affektiver Steuerung**

Automation system with affective control

Système d'automatisation avec commande affectif

(84) Benannte Vertragsstaaten:
**DE FR GB IT**

(43) Veröffentlichungstag der Anmeldung:
**22.03.2006 Patentblatt 2006/12**

(73) Patentinhaber: **SIEMENS AKTIENGESELLSCHAFT**
**80333 München (DE)**

(72) Erfinder:
• **Dinges, Clemens**
**90587 Obermichelbach (DE)**
• **Ehrmann, Matthias**
**91564 Neuendettelsau (DE)**
• **Schlereth, Michael**
**91452 Wilhermsdorf (DE)**

(56) Entgegenhaltungen:
• **LEE A ET AL: "Emotional attributes in autonomic computing systems" PROCEEDINGS OF THE 14TH INTERNATIONAL WORKSHOP ON DATABASE AND EXPERT SYSTEMS APPLICATIONS, 1. September 2003 (2003-09-01), Seiten 681-685, XP010658251**
• **CUSTODIO L ET AL: "Artificial emotions and emotion-based control systems" EMERGING TECHNOLOGIES AND FACTORY AUTOMATION, 1999. PROCEEDINGS. ETFA '99. 1999 7TH IEEE INTERNATIONAL CONFERENCE ON BARCELONA, SPAIN 18-21 OCT. 1999, PISCATAWAY, NJ, USA,IEEE, US, Bd. 2, 18. Oktober 1999 (1999-10-18), Seiten 1415-1420, XP010365759 ISBN: 0-7803-5670-5**

## Beschreibung

Die Erfindung betrifft ein Automatisierungssystem mit einer speicherprogrammierbaren Steuerung, wobei die speicherprogrammierbare Steuerung deterministisches Verhalten aufweist und zur Bildung mindestens eines ersten Ergebniswerts aus mindestens einem ersten Eingangswert vorgesehen ist sowie ein Verfahren zur Steuerung eines technischen Prozesses oder einer technischen Anlage mit einem solchen Automatisierungssystem.

Automatisierungssysteme, insbesondere industrielle Automatisierungssysteme, sollen zuverlässig, sicher und ohne Gefährdung für ihre Umwelt arbeiten. Insbesondere bei verteilten Automatisierungslösungen ist aber die Komplexität von Automatisierungssystemen erhöht und damit auch die Anforderungen an den Menschen zur Beherrschung dieser Komplexität. Dies gilt im Besonderen für die Betriebsführungsphase, in der der Mensch die Wirkung einer vom Menschen ausgelösten Aktion auf das Verhalten des Automatisierungssystem insgesamt und bezogen auf einzelne Subsysteme aufgrund der Wechselwirkungen der Komponenten des Automatisierungssystem nicht mehr sicher abschätzen kann und sich darauf verlassen muss, dass im Automatisierungssystem insbesondere (möglichst) alle potentiellen Fehlerfälle bzw. Sicherheitsrisiken abgedeckt sind und vom System beherrscht werden. Ziel ist, dass der Mensch als potentielles Sicherheitsrisiko möglichst ausgeschaltet wird. Andererseits setzt dieses "Ausschalten" voraus, dass zum Engineeringzeitpunkt alle bekannten bzw. denkbaren Betriebszustände und besonders Fehler- und Störungssituationen explizit in Form von Algorithmen (z. B. in Form von Steuerungscode) beschrieben werden können und müssen. Dabei können aber keine unvorhergesehenen Ereignisse bzw. Situationen berücksichtigt werden. Unvorhergesehene Ereignisse während des Betriebs der Anlage führen bisher dazu, dass das Automatisierungssystem nicht korrekt darauf reagieren kann und der Mensch eingreifen muss, mit den oben genannten Risiken und dies in einer sowieso ungewöhnlichen Situation.

Die DE 198 57 683 A1 beschreibt ein Automatisierungssystem, bei welchem speicherprogrammierbare Steuerungen über ein Bussystem dezentrale Einheiten ansprechen, die einen Prozess regeln, steuern oder überwachen. Dabei werden die Steuerungseinrichtungen mit dezentralen Peripheriegeräten in Bezug auf sicherheitsrelevante Vorgänge und Abläufe redundant überwacht. Das Steuerungssystem und die Sicherheitseinrichtung können unabhängig voneinander programmiert und geprüft werden.

Im Folgenden werden Vorgänge zur Regelung, Steuerung und/oder Überwachung mit dem Begriff Steuerung zusammengefasst.

Der Erfindung liegt die Aufgabe zugrunde, die Reaktion eines Automatisierungssystems in Situationen zu verbessern, die beim Engineering nicht berücksichtigt wurden.

Diese Aufgabe wird mit einem Automatisierungssystem mit einer speicherprogrammierbaren Steuerung gelöst, wobei die speicherprogrammierbare Steuerung deterministisches Verhalten aufweist und zur Bildung mindestens eines ersten Ergebniswerts aus mindestens einem ersten Eingangswert vorgesehen ist, wobei Mittel zur affektiven Steuerung vorgesehen sind, die zur Bildung mindestens eines Zustandswerts aus mindestens einem zweiten Eingangswert mittels Situationsbewertungsmitteln und zur Verknüpfung des Zustandswerts mit einem Eigenschaftsprofil zur Bildung eines zweiten Ergebniswerts vorgesehen sind, wobei Verknüpfungsmittel zur Verknüpfung des ersten Ergebniswerts mit dem zweiten Ergebniswert zur Bildung mindestens eines Ausgangswerts vorgesehen sind.

Diese Aufgabe wird mit einem Verfahren zur Steuerung eines technischen Prozesses oder einer technischen Anlage gelöst, bei welchem Verfahren mit einer deterministisches Verhalten aufweisenden speicherprogrammierbaren Steuerung eines Automatisierungssystems mindestens ein erster Ergebniswert aus mindestens einem ersten Eingangswert gebildet wird, wobei mit Mitteln zur affektiven Steuerung mindestens ein Zustandswert aus mindestens einem zweiten Eingangswert gebildet wird und mit Situationsbewertungsmitteln der Zustandswert mit einem Eigenschaftsprofil zur Bildung eines zweiten Ergebniswerts verknüpft wird, wobei mit Verknüpfungsmitteln der erste Ergebniswert mit dem zweiten Ergebniswert zur Bildung mindestens eines Ausgangswerts verknüpft wird.

Untersuchungen des Neurologen Antonio Damasio zeigen, dass Gefühle die Basis des intelligenten Denkens sind. Gemäß Damasio gefährden Gefühle nicht etwa die rationale Leistung des Gehirns, sondern sind vielmehr Grundbedingung für das Funktionieren der Vernunft. Damasio stellte die Theorie auf, dass alle Erfahrungen des Menschen im Laufe seines Aufwachsens in einem emotionalen Erfahrungsgedächtnis gespeichert werden. Dieses Erfahrungsgedächtnis teilt sich laut Damasio über ein körperliches Signalsystem mit, das dem Menschen bei der Entscheidungsfindung hilft und das Damasio als somatische Marker bezeichnet. Bei der Vorstellung verschiedener Handlungsalternativen geben die somatischen Marker also eine durch bisherige Erfahrungen bestimmte Rückmeldung, die dem im Entscheidungsprozess befindlichen Menschen helfen, indem sie zunächst alle emotional nicht tragbaren Handlungsmöglichkeiten ausschließen. Das Verhalten des Menschen, insbesondere in schwierigen, gefährlichen oder auch unbekannten Situationen, wird somit durch eine Kombination aus bewusstem und unbewusstem Handeln bestimmt. Dem bewussten Handeln beim Menschen ähnelt die Programmierung eines Automatisierungssystems, bei welcher der Automatisierungsentwickler die Reaktion auf zum Engineeringzeitpunkt vorhersehbare Ereignisse und Situationen festlegt. Bestimmend ist hier das Kausalitätsprinzip und damit auch streng deterministisches Verhalten. Die speicherprogrammierbare Steuerung ist in diesem Sinne eine herkömmliche Steuerung. Gemäß der Erfindung wird das Automatisierungssystem um eine affektive Steuerung erweitert, mit der das Automatisierungssystem auf unprogrammierte Situationen reagieren kann. Die affektive Steuerung entspricht dem unbewussten Handeln des Menschen. Das Automatisierungssystem wird also um einen zusätzlichen "unbewussten" Steuerungsanteil erweitert.

In "Artificial Emotions and Emotion-Based Control Systems" von L. Custódio et. al, IEEE, US Bd. 2 18.October 1999, Seiten 1415-1420 wird der Gedankenansatz von Damasio nochmals erläutert. Ergänzend wird eine System-Architektur beschrieben, beinhaltend zwei Wahrnehmungs-Ebenen (cognitive, perceptual).

Der Artikel "Emotional Attributes in Autonomic Computing Systems" von Andrew Lee und Mohammed Ibrahim, Proceedings of the 14th international Workshop on Database and Expert Systems Applications, 1.September 2003 beschreibt ergänzend das Computing System EAMON (Emotional Attribute MONitor), insbesondere verwendbare Attribute: Emotionen, Physikalische und Persönliche Attribute und deren Umsetzung auf das Modell.

Gemäß vorteilhaften Ausgestaltungen der Erfindung beschreibt der Zustandswert die Ausprägung eines Gefühls und repräsentiert das Eigenschaftsprofil Eigenschaften, insbesondere Charaktereigenschaften des Automatisierungssystems. Mit anderen Worten wird das unbewusste Handeln des Automatisierungssystems durch ein Gefühlsmodell bestimmt, das sich an der positiven bzw. negativen Affektivität des Menschen orientiert. Ziel ist dabei aber nicht, menschliches Verhalten im Automatisierungssystem möglichst exakt nachzubilden - im Sinne einer "intelligenten Maschine" - oder die "Gefühle" der Maschine als Grundlage der Interaktion mit dem Bediener zu verwenden, sondern durch das Gefühlsmodell und darauf aufsetzende Algorithmen eine Einordnung des jeweiligen Zustands des Automatisierungssystems in mit "Gefühlen" behaftete Zustandsräume durch das Automatisierungssystem möglich zu machen. Von dem jeweiligen Zustandsraum, dem damit verbundenen "Gefühl" und dem jeweiligen Eigenschaftsprofil des Automatisierungssystems abhängig können dann die dieser Kombination zugeordneten "unbewussten Handlungen" durch die Mittel zur affektiven Steuerung in Form des zweiten Ergebniswertes ermittelt werden.

Die Erfindung ermöglicht es somit, dass das Automatisierungssystem auch in nicht explizit beschriebenen Betriebszuständen vernünftig reagiert, ohne dass ein Mensch eingreifen muss. Gemäß einer weiteren vorteilhaften Ausgestaltung der Erfindung sind ein oder mehrere zweite Eingangswerte identisch zu mindestens einem bzw. mehreren ersten Eingangswerten. Bei der Situationsbewertung der affektiven Steuerung wird somit eine Untermenge der Zustände bzw. Signale erfasst, welche der konventionellen speicherprogrammierbaren Steuerung als Eingangswerte zur Verfügung stehen und mittels der Situationsbewertungsmittel bewertet.

Vorteilhafterweise nutzt die affektive Steuerung Mittel und Methoden der linearen Algebra. Es wird vorgeschlagen, dass die Eingangswerte, die Zustandswerte, die Ergebniswerte und/oder die Ausgangswerte jeweils als Vektor darstellbar sind. Gemäß weiteren vorteilhaften Ausgestaltungen der Erfindung sind zudem die Situationsbewertungsmittel als Situationsbewertungsmatrix ausgeführt sowie das Eigenschaftsprofil als Eigenschaftsmatrix darstellbar.

Die affektive Steuerung ist jedoch nicht beschränkt auf lineare Abbildungen, vielmehr können die Situationsbewertungsmittel und/oder das Eigenschaftsprofil auch nichtlineare Funktionen enthalten.

Gemäß einer weiteren vorteilhaften Ausgestaltung der Erfindung ist der zweite Ergebniswert dem ersten Ergebniswert zur Bildung des mindestens einen Ausgangswerts überlagerbar. Die unbewussten Handlungen modifizieren somit die Funktionsweise der bewussten Handlungen bzw. ersetzen letztere, insbesondere dann, wenn diese nicht ermittelt werden können, da z. B. im Engineering die betreffende Situation nicht berücksichtigt worden ist.

Gemäß einer weiteren vorteilhaften Ausgestaltung der Erfindung dienen somit die Mittel zur affektiven Steuerung zur Überwachung der speicherprogrammierbaren Steuerung.

Da vernünftiges Verhalten stark von der individuellen Definition z. B. des Anlagenbetreibers abhängig ist, wird vorgeschlagen, dass dem Automatisierungssystem unterschiedliche Verhaltenscharaktere zuweisbar sind. Somit ist gemäß weiteren vorteilhaften Ausgestaltungen der Erfindung das Eigenschaftsprofil mit einem Engineeringsystem erstellbar bzw. durch einen Lernprozess beeinflussbar. Zudem wird vorgeschlagen, dass das Eigenschaftsprofil speicherbar und auf andere Automatisierungssysteme übertragbar ist.

Gemäß einer weiteren vorteilhaften Ausgestaltung der Erfindung wird ein System mit mehreren zusammenwirkenden Automatisierungssystemen vorgeschlagen, wobei zumindest ein Teil der Automatisierungssysteme unterschiedliche Eigenschaftsprofile aufweist. So können z. B. in Anlagen mehrere Automatisierungssysteme mit verschiedenen Charaktermatrizen eine Gruppe bilden. Eine solche Gruppe aus Automatisierungssystemen funktioniert am besten, wenn sie eine ausgewogene Charakterverteilung besitzt. Ein Engineeringsystem könnte diese Ausgewogenheit durch die Verteilung unterschiedlicher sich ergänzender Charaktermatrizen auf die Automatisierungssysteme sicherstellen.

Nachfolgend wird die Erfindung anhand der in den Figuren dargestellten Ausführungsbeispiele näher beschrieben und erläutert.

Es zeigen:

FIG 1    ein Automatisierungssystem mit einer speicherprogrammierbaren Steuerung und Mitteln zur affektiven Steuerung,

FIG 2    ein solches System, das Mittel der linearen Algebra nutzt.

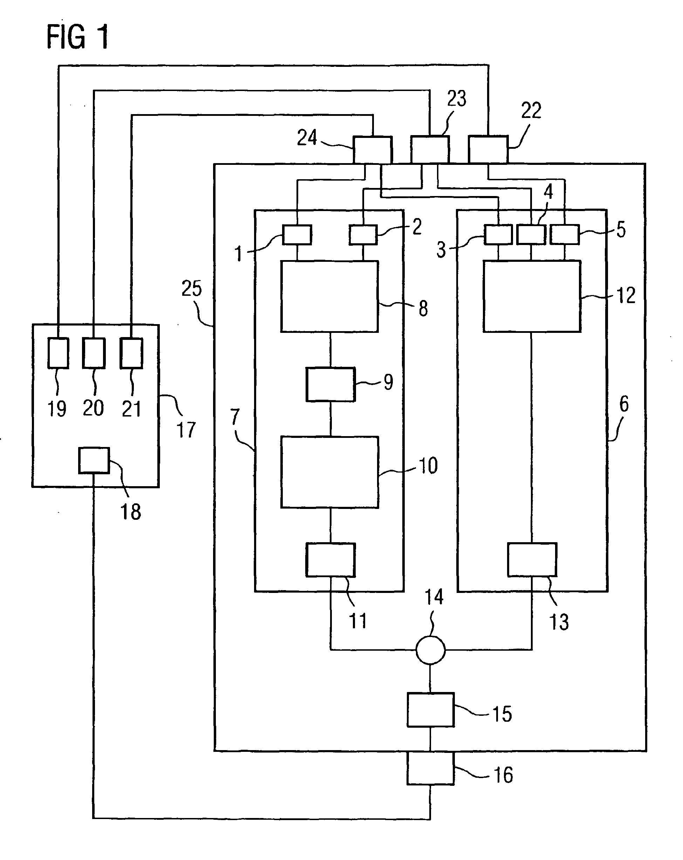

FIG 1 zeigt ein Automatisierungssystem 25 mit einer speicherprogrammierbaren Steuerung 6 und Mitteln zur affektiven Steuerung 7. Das Automatisierungssystem dient zur Automatisierung eines technischen Prozesses oder einer technischen Anlage 17. Über Schnittstellen 22, 23, 24 werden Prozesssignale 19, 20, 21 in das Automatisierungssystem eingelesen. Die eingelesenen Signale stehen - zumindest teilweise - der speicherprogrammierbaren Steuerung 6 als erste Eingangswerte 3, 4, 5 und den Mitteln zur affektiven Steuerung 7 als zweite Eingangswerte 1, 2 zur Verfügung. Die konventionelle speicherprogrammierbare Steuerung 6 verarbeitet die ersten Eingangswerte 3, 4, 5 mit einem Steuerungsprogramm 12 und bildet einen ersten Ergebniswert 13. Die Mittel zur affektiven Steuerung 7 bilden mit Situationsbewertungsmitteln 8 aus den zweiten Eingangswerten 1, 2 einen Zustandswert 9. Der Zustandswert wird dann von den Mitteln zur affektiven Steuerung 7 mit einem Eigenschaftsprofil 10 verknüpft, so dass ein zweiter Ergebniswert 11 gebildet wird. Mit Verknüpfungsmitteln 14 des Automatisierungssystems 25 werden der erste Ergebniswert 13 und der zweite Ergebniswert 11 zur Bildung eines Ausgangswerts 15 verknüpft. Der Ausgangswert 15 wird über eine Schnittstelle 16 des Automatisierungssystems 25 zur Steuerung und/oder Regelung des technischen Prozesses bzw. der Anlage 17 als Signal 18 zur Verfügung gestellt.

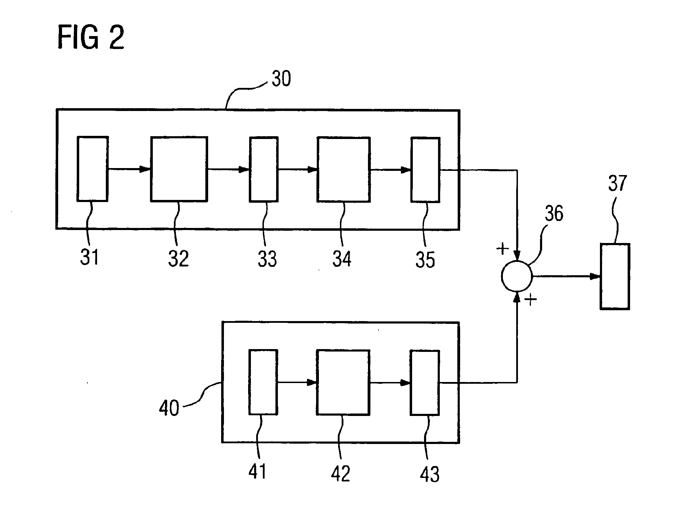

FIG 2 zeigt ein Ausführungsbeispiel für ein Automatisierungssystem mit Mitteln zur affektiven Steuerung 30 sowie einer herkömmlichen speicherprogrammierbaren Steuerung 40, wobei die Eingangswerte, die Zustandswerte, die Ergebniswerte, die Ausgangswerte, die Situationsbewertungsmittel sowie das Eigenschaftsprofil mit Mitteln der linearen Algebra beschrieben sind. Der Ausgangswert wird dabei als Handlungsvektor 37 dargestellt. Die Ergebniswerte der speicherprogrammierbaren Steuerung 40 bzw. der Mittel zur affektiven Steuerung 30 werden als Handlungsvektoren 43 bzw. 35 dargestellt. Der Handlungsvektor 37 (Vektor y) wird dabei nicht nur von der speicherprogrammierbaren Steuerung 40 mit ihrem Handlungsvektor 43 (Vektor $y_r$) bestimmt, sondern auch vom Ausgangssignal der Mittel zur affektiven Steuerung 30, dem Handlungsvektor 35 (Vektor $y_a$) :

$$y = y_r + y_a \tag{1}$$

Es wird somit ein Gefühlsmodell in das Automatisierungssystem eingeführt. Das Gefühlsmodell beruht auf der Grundlage einer z. B. auf Erfahrung basierenden Bewertung aktuell gemessener Steuerungszustände. Das eröffnet die Möglichkeit, statische Kausalketten durch Definition von Eigenschaftsprofilen bediener- und zustandsspezifisch zu modifizieren bzw. zu ergänzen, insbesondere bei Anlagenzuständen, für die keine Aktionen im Engineering festgelegt wurden. Ein solches Eigenschaftsprofil wird auch als charakterspezifisches Handlungsprofil oder als Charakterprofil bezeichnet. Die "Maschinengefühle" werden mit Hilfe dieses Profils zu einer affektiven Stellgröße weiterverarbeitet, die schließlich das herkömmliche Steuerungsverhalten beeinflusst bzw. diesem überlagert wird.

Die herkömmliche speicherprogrammierbare Steuerung 40 entspricht dem bewussten Handeln. Die Eingangswerte werden als Eingangsvariablenvektor 41 (Vektor u) über ein Steuerungsprogramm, das eine charakteristische Steuerungsprogrammmatrix 42 (Matrix P) abbildet, auf den Handelungsvektor 43 (Vektor $y_r$) abgebildet:

$$y_r = P \cdot u \tag{2}$$

Die Mittel zur affektiven Steuerung 7 erweitern das Automatisierungssystem um eine unbewusste Handlungskomponente. Zentraler Bestandteil ist dabei der Zustandswert 9, welcher hier als Gefühlsvektor 33 (Vektor f) ausgebildet ist. Der Gefühlsvektor 33 wird über eine Situationsbewertung gebildet und über das Eigenschaftsprofil, hier als Charaktermatrix 34 (Matrix C) ausgeführt, auf den unbewussten Handlungsvektor 35 (Vektor $y_a$) abgebildet. Die Elemente des durch die Bewertung erzeugten Gefühlsvektors 33 können dabei an menschliche Gefühle wie Angst oder Freude angelehnt sein oder auch abstrakte Kenngrößen eines Maschinengefühls sein. Jedes Element $f_i$ des Gefühlsvektors 33 kann eine Ausprägung, z. B. als Prozentsatz ausgedrückt, eines Gefühls (Angst, Freude, usw.) repräsentieren. Die Situationsbewertung ermittelt aus den Eingangswerten, welche hier als Situationsvektor 31 (Vektor $u_s$) vorliegen, über die Situationsbewertungsmittel, welche hier als Situationsbewertungsmatrix 32 (Matrix S) vorliegen, den Gefühlsvektor 32 (Vektor f):

$$f = S \cdot u_s \tag{3}$$

Die Charaktermatrix 34 (Matrix C) beschreibt den Typ des Automatisierungssystems. In einer Anlage können z. B. ängstliche oder forsche Automatisierungssysteme eingebaut sein. Der Charakter eines Automatisierungssystems könnte explizit hinterlegt werden (vgl. Gene des Menschen) oder durch Erziehung und/oder Erfahrung in der Anlage entstehen (vgl. Mobbing, Erfolgserlebnisse). Beim expliziten Hinterlegen wird die Charaktermatrix 34 z. B. in einem Engineeringtool hinterlegt.

Beim Lernprozess ist die Charaktermatrix 34 nicht zeitinvariant, sondern sie kann sich während des Steuerungsbetriebs z. B. in einer Rückkopplungsschleife des Handlungsvektors 37 auf den Situationsvektor 31 ändern. In der Charaktermatrix 34 ist die Lernerfahrung dieses Automatisierungssystems gespeichert. Die Erfahrung kann durch das Abspeichern der Charaktermatrix 34 auch an andere Automatisierungssysteme weitergegeben werden. Dadurch kann der individuelle Lernerfolg eines Automatisierungssystems reproduziert werden (vgl. Weitergabe von Memen).

Beispiele für Erfahrung bzw. Training könnten sein:

- Eine Steuerung startet in einer Maschine mit einer Default-Parametrierung. Während des Betriebs passt die Steuerung ihre Parameter gemäß der Rückmeldung der Sensorik der Maschine an, um die Fertigung zu optimieren (Erfahrung).

- Ein Benutzer spielt über die Mensch-Maschine-Schnittstelle mit einer Steuerung verschiedene Szenarien durch, um den Fertigungsprozess zu optimieren (Training durch den Menschen).

- Ein spezieller Rechner mit Optimierungsalgorithmen wird temporär mit einer Fertigungszelle verbunden, um verschiedene Optimierungsszenarien durchzuspielen (Training durch die Maschine).

Die unbewussten Handlungen eines Automatisierungssystems, als Handlungsvektor 35 (Vektor $y_a$) dargestellt, werden über die Charaktermatrix 34 (Matrix C) aus dem Gefühlsvektor 33 (Vektor f) gebildet:

$$y_a = C \cdot f \qquad\qquad\qquad (4)$$

Der von den Mitteln zur affektiven Steuerung 30 gebildete Handlungsvektor 35 wird mit dem von der klassischen speicherprogrammierbaren Steuerung 40 gebildeten Handlungsvektor 43 mit Verknüpfungsmitteln 36 zum Handlungsvektor 37 verknüpft. Der Handlungsvektor 37 stellt das Ausgangssignal des Automatisierungssystems dar.

Die unbewusste Steuerungskomponente wird somit durch eine Regelungsstruktur realisiert. In dieser Regelung beeinflusst eine Situationserfassung und Bewertung die unbewussten Zustände (= Gefühle) der Steuerung und die daraus folgenden affektiven Steuerungshandlungen. Charakterspezifische Handlungsprofile werden über eine Charaktermatrix eingeführt. Die unbewussten Handlungen werden den bewussten Handlungen des herkömmlichen Steuerungsprozesses überlagert. Mittel und Methoden beispielsweise aus dem Umfeld des so genannten Organic Computing und Affective Computing finden Anwendung.

Das Ausführungsbeispiel gemäß FIG 2 soll im Folgenden mit konkreten Beispielswerten näher erläutert werden.

Der Inhalt des Gefühlsvektors 32 (Vektor f) wird folgenderma-ßen definiert:

$$f = \begin{bmatrix} f_{Angst} \\ f_{Freude} \\ f_{Gefahr} \end{bmatrix} \qquad\qquad (5)$$

Der Gefühlsvektor 33 repräsentiert somit die Ausprägung der Gefühle Angst, Gefahr und Freude. Jedes dieser Gefühle ist durch einen Skalar repräsentiert, der im Beispiel einen Wert zwischen 0 und 100 % annehmen kann. Das bedeutet, dass zu einem bestimmten Zeitpunkt die Steuerung z. B. 30 % Angst, 50 % Gefahr und 10 % Freude empfinden könnte. In diesem Beispiel werden menschliche Gefühlsbegriffe wie Angst oder Freude auf die Maschine übertragen, um das Gefühlsengineering zu vereinfachen. Der Gefühlsvektor 33 könnte aber auch abstrakte Maschinengefühle enthalten, die keine Entsprechung in menschlichen Gefühlen haben. Diese Gefühle würden dann dazu dienen, spezielle Schwerpunkte in der Übertragung der situativen Bewertung durch die Bewertungsmatrix 32 auf den unbewussten Handlungsvektor 35 zu setzen. Gefahr soll hier als Beispiel für ein solches abstrakteres Gefühl dienen (Gefahr ist beim Menschen kein Gefühl, sondern eine Situation).

Im nächsten Schritt werden die Elemente des Situationsvektors 31 (Vektor $u_s$) festgelegt. Der Situationsvektor 31 bestimmt, welche Eingangswerte die affektive Steuerung zur Erzeugung der Gefühle im Gefühlsvektor 33 (Vektor f) zur Verfügung stehen. Ein Mensch verfügt über ein universales Instrumentarium an Sensorik, wie Auge oder Gehör, aus dem er durch Vorverarbeitung die verschiedensten speziellen Informationen ableiten kann. Eine Maschine besitzt in der Regel spezialisierte Sensoren, z. B. zur Temperaturerfassung oder zur Zählung von Stückzahlen oder auch andere Eingangswerte wie z. B. eine Stückzahlvorgabe:

$$u_s = \begin{bmatrix} u_{Temperatur} \\ u_{Ist-Stückzahl} \\ u_{Stückzahlvorgabe} \end{bmatrix} \qquad (6)$$

Im Ausführungsbeispiel wird aus diesen Eingangsvektoren 31 über die Situationsbewertungsmatrix 32 (Matrix S)

$$S = \begin{bmatrix} 2 & -3 & 2 \\ 0 & 10 & 2 \\ 10 & 0 & 0 \end{bmatrix} \qquad (7)$$

der Gefühlsvektor (Vektor f) gebildet:

$$f = \begin{bmatrix} f_{Angst} \\ f_{Freude} \\ f_{Gefahr} \end{bmatrix} = S \cdot u_s = \begin{bmatrix} 2 & -6 & 5 \\ 0 & 10 & 2 \\ 10 & 0 & 0 \end{bmatrix} \cdot \begin{bmatrix} u_{Temperatur} \\ u_{Ist-Stückzahl} \\ u_{Stückzahlvorgabe} \end{bmatrix} \qquad (8)$$

Die erste Zeile der Situationsbewertungsmatrix 32 bewertet die Relevanz der Eingangswerte für den die Angst repräsentierenden Skalar:

$$f_{Angst} = 2 \cdot u_{Temperatur} - 6 \cdot u_{Ist-Stückzahl} + 5 \cdot u_{Stückzahlvorgabe} \qquad (9)$$

Je höher die ist - Stückzahl, desto mehr sinkt die Angst dieser Steuerung; je größer die Stückzahlvorgabe, desto mehr steigt die (Versagens-)Angst dieser Steuerung und eine erhöhte Temperatur erzeugt auch ein kleines Angstgefühl. Bei Freude ist die Ist-Stückzahl besonders hoch gewichtet, bei Gefahr die Temperatur.

Als Reaktion auf den Gefühlszustand kann die Steuerung über den unbewussten Handlungsvektor 35 (Vektor $y_a$) die Maschine beeinflussen:

$$y_a = \begin{bmatrix} y_{Kühlung} \\ y_{Drehzahl} \end{bmatrix} \qquad (10)$$

In diesem Beispiel regelt die Maschine unbewusst die Kühlung und die Drehzahl über die Charaktermatrix:

$$C = \begin{bmatrix} 5 & -1 & 2 \\ -2 & 6 & -3 \end{bmatrix} \qquad (11)$$

Das führt zu der Abbildungsfunktion:

$$y_a = \begin{bmatrix} y_{Kühlung} \\ y_{Drehzahl} \end{bmatrix} = C \cdot f = \begin{bmatrix} 5 & -1 & 2 \\ -2 & 6 & -3 \end{bmatrix} \cdot \begin{bmatrix} f_{Angst} \\ f_{Freude} \\ f_{Gefahr} \end{bmatrix} \qquad (12)$$

Bei dieser Steuerung führt z. B. die hohe Gewichtung Angst bei der Übertragung auf die Kühlung zu einem leicht irrationalen Verhalten bei Angst.

$$y_{Kühlung} = 5 \cdot f_{Angst} - f_{Freude} + 2 \cdot f_{Gefahr} \qquad (13)$$

Das Anwendungsbeispiel wurde für lineares Systemverhalten beschrieben. Ebenso können die Situationsbewertung und die Charaktermatrix nichtlineare Funktionen darstellen.

In einem nicht dargestellten Anwendungsbeispiel wird ein System mit mehreren zusammenwirkenden Automatisierungssystemen realisiert, wobei zumindest ein Teil der Automatisierungssysteme unterschiedliche Eigenschaftsprofile aufweisen. Dabei bilden mehrere Automatisierungssysteme mit verschiedenen Charaktermatrizen eine Gruppe, wobei diese Gruppe eine ausgewogene Charakterverteilung besitzt, da unterschiedliche sich ergänzende Charaktermatrizen auf die Automatisierungssysteme verteilt sind. Eine Gruppe wird als Entität durch einen Gruppentrainer weiterentwickelt. Das könnte z. B. ein Automatisierungssystem sein, das permanent oder temporär einer Gruppe zugeordnet ist und diese Rolle übernimmt. Ein Bediener kann diese Rolle ebenfalls übernehmen.

Zusammengefasst betrifft die Erfindung somit ein Automatisierungssystem mit einer speicherprogrammierbaren Steuerung 6, wobei die speicherprogrammierbare Steuerung 6 deterministisches Verhalten aufweist und zur Bildung mindestens eines ersten Ergebniswerts 13 aus mindestens einem ersten Eingangswert 3, 4, 5 vorgesehen ist sowie ein Verfahren zur Steuerung eines technischen Prozesses oder einer technischen Anlage mit einem solchen Automatisierungssystem. Um die Reaktion des Automatisierungssystems in Situationen zu verbessern, die beim Engineering nicht berücksichtigt wurden, wird vorgeschlagen, dass zusätzlich Mittel zur affektiven Steuerung 7 vorgesehen sind, die zur Bildung mindestens eines Zustandswerts 9 aus mindestens einem zweiten Eingangswert 1, 2 mittels Situationsbewertungsmitteln 8 und zur Verknüpfung des Zustandswerts 9 mit einem Eigenschaftsprofil 10 zur Bildung eines zweiten Ergebniswerts 11 vorgesehen sind, wobei Verknüpfungsmittel 14 zur Verknüpfung des ersten Ergebniswerts 13 mit dem zweiten Ergebniswert 11 zur Bildung mindestens eines Ausgangswerts 15 vorgesehen sind.

**Patentansprüche**

1. Automatisierungssystem mit einer speicherprogrammierbaren Steuerung (6), wobei die speicherprogrammierbare Steuerung (6) deterministisches Verhalten aufweist und zur Bildung mindestens eines ersten Ergebniswerts (13) aus mindestens einem ersten Eingangswert (3, 4, 5) vorgesehen ist,
**dadurch gekennzeichnet,**
**dass** Mittel zur affektiven Steuerung (7) vorgesehen sind, die zur Bildung mindestens eines Zustandswerts (9) aus mindestens einem zweiten Eingangswert (1, 2) mittels Situationsbewertungsmitteln (8) und zur Verknüpfung des Zustandswerts (9) mit einem Eigenschaftsprofil (10) zur Bildung eines zweiten Ergebniswerts (11) vorgesehen sind, wobei Verknüpfungsmittel (14) zur Verknüpfung des ersten Ergebniswerts (13) mit dem zweiten Ergebniswert (11) zur Bildung mindestens eines Ausgangswerts (15) vorgesehen sind.

2. Automatisierungssystem nach Anspruch 1,

**dadurch gekennzeichnet,**
**dass** der Zustandswert (9) gebildet über eine aktuelle Situationsbewertung basierend auf Erfahrungswerten die Ausprägung eines Gefühls beschreibt.

3. Automatisierungssystem nach Anspruch 1 oder 2,
**dadurch gekennzeichnet,**
**dass** das Eigenschaftsprofil (10) Eigenschaften, insbesondere Charaktereigenschaften des Automatisierungssystems durch Gewichtung der Zustandswerte (9) repräsentiert.

4. Automatisierungssystem nach einem der vorhergehenden Ansprüche,
**dadurch gekennzeichnet,**
**dass** ein oder mehrere zweite Eingangswerte (1, 2) identisch zu mindestens einem bzw. mehreren ersten Eingangswerten (3, 4, 5) sind.

5. Automatisierungssystem nach einem der vorhergehenden Ansprüche,
**dadurch gekennzeichnet,**
**dass** die Eingangswerte (31, 41), die Zustandswerte (33), die Ergebniswerte (35, 43) und/oder die Ausgangswerte (37) jeweils als Vektor darstellbar sind.

6. Automatisierungssystem nach einem der vorhergehenden Ansprüche,
**dadurch gekennzeichnet,**
**dass** die Situationsbewertungsmittel als Situationsbewertungsmatrix (32) ausgeführt sind.

7. Automatisierungssystem nach einem der vorhergehenden Ansprüche,
**dadurch gekennzeichnet,**
**dass** das Eigenschaftsprofil als Eigenschaftsmatrix (34) darstellbar ist.

8. Automatisierungssystem nach einem der vorhergehenden Ansprüche,
**dadurch gekennzeichnet,**
**dass** die Situationsbewertungsmittel (8) und/oder das Eigenschaftsprofil (10) nichtlineare Funktionen enthalten.

9. Automatisierungssystem nach einem der vorhergehenden Ansprüche,
**dadurch gekennzeichnet,**
**dass** der zweite Ergebniswert (11, 35) dem ersten Ergebniswert (13, 43) zur Bildung des mindestens einen Ausgangswerts (15, 37) überlagerbar ist.

10. Automatisierungssystem nach einem der vorhergehenden Ansprüche,
**dadurch gekennzeichnet,**
**dass** die Mittel zur affektiven Steuerung (7) zur Überwachung der speicherprogrammierbaren Steuerung (6) dienen.

11. Automatisierungssystem nach einem der vorhergehenden Ansprüche,
**dadurch gekennzeichnet,**
**dass** das Eigenschaftsprofil (10) mit einem Engineeringsystem erstellbar ist.

12. Automatisierungssystem nach einem der vorhergehenden Ansprüche,
**dadurch gekennzeichnet,**
**dass** das Eigenschaftsprofil (10) durch einen Lernprozess beeinflussbar ist.

13. Automatisierungssystem nach einem der vorhergehenden Ansprüche,
**dadurch gekennzeichnet,**
**dass** das Eigenschaftsprofil (10) speicherbar und auf andere Automatisierungssysteme übertragbar ist.

14. System mit mehreren zusammenwirkenden Automatisierungssystemen nach einem der vorhergehenden Ansprüche, wobei zumindest ein Teil der Automatisierungssysteme unterschiedliche Eigenschaftsprofile (10) aufweist.

15. Verfahren zur Steuerung eines technischen Prozesses oder einer technischen Anlage, bei welchem Verfahren mit einer deterministisches Verhalten aufweisenden speicherprogrammierbaren Steuerung (6) eines Automatisierungssystems mindestens ein erster Ergebniswert (13) aus mindestens einem ersten Eingangswert (3, 4, 5) gebildet wird,

**dadurch gekennzeichnet,**
**dass** mit Mitteln zur affektiven Steuerung (7) mindestens ein Zustandswert (9) aus mindestens einem zweiten Eingangswert (1, 2) gebildet wird und mit Situationsbewertungsmitteln (8) der Zustandswert (9) mit einem Eigenschaftsprofil (10) zur Bildung eines zweiten Ergebniswerts (11) verknüpft wird, wobei mit Verknüpfungsmitteln (14) der erste Ergebniswert (13) (13) mit dem zweiten Ergebniswert (11) zur Bildung mindestens eines Ausgangswerts (15) verknüpft wird.

16. Verfahren nach Anspruch 15,
**dadurch gekennzeichnet,**
**dass** der Zustandswert (9) gebildet über eine aktuelle Situationsbewertung basierend auf Erfahrungswerten die Ausprägung eines Gefühls beschreibt.

17. Verfahren nach Anspruch 16 oder 17,
**dadurch gekennzeichnet,**
**dass** das Eigenschaftsprofil (10) Eigenschaften, insbesondere Charaktereigenschaften des Automatisierungssystems durch Gewichtung der Zustandswerte (9) repräsentiert.

18. Verfahren nach einem der Ansprüche 15 bis 17,
**dadurch gekennzeichnet,**
**dass** ein oder mehrere zweite Eingangswerte (1, 2) identisch zu mindestens einem bzw. mehreren ersten Eingangswerten (3, 4, 5) sind.

19. Verfahren nach einem der Ansprüche 15 bis 18,
**dadurch gekennzeichnet,**
**dass** die Eingangswerte (31, 41), die Zustandswerte (33), die Ergebniswerte (35, 43) und/oder die Ausgangswerte (37) jeweils als Vektor dargestellt sind.

20. Verfahren nach einem der Ansprüche 15 bis 19,
**dadurch gekennzeichnet,**
**dass** die Situationsbewertungsmittel als Situationsbewertungsmatrix (32) ausgeführt sind.

21. Verfahren nach einem der Ansprüche 15 bis 20,
**dadurch gekennzeichnet,**
**dass** das Eigenschaftsprofil als Eigenschaftsmatrix (34) dargestellt ist.

22. Verfahren nach einem der Ansprüche 15 bis 21,
**dadurch gekennzeichnet,**
**dass** die Situationsbewertungsmittel (8) und/oder das Eigenschaftsprofil (10) nichtlineare Funktionen enthalten.

23. Verfahren nach einem der Ansprüche 15 bis 22,
**dadurch gekennzeichnet,**
**dass** der zweite Ergebniswert (11, 35) dem ersten Ergebniswert (13, 43) zur Bildung des mindestens einen Ausgangswerts (15, 37) überlagert wird.

24. Verfahren nach einem der Ansprüche 15 bis 23,
**dadurch gekennzeichnet,**
**dass** die Mittel zur affektiven Steuerung (7) die speicherprogrammierbare Steuerung (6) überwachen.

25. Verfahren nach einem der Ansprüche 15 bis 24,
**dadurch gekennzeichnet,**
**dass** das Eigenschaftsprofil (10) mit einem Engineeringsystem erstellt wird.

26. Verfahren nach einem der Ansprüche 15 bis 25,
**dadurch gekennzeichnet,**
**dass** das Eigenschaftsprofil (10) durch einen Lernprozess beeinflusst wird.

27. Verfahren nach einem der Ansprüche 15 bis 26,
**dadurch gekennzeichnet,**

**dass** das Eigenschaftsprofil (10) gespeichert und auf andere Automatisierungssysteme übertragen wird.

**Claims**

1. Automation system with a programmable controller (6), with the programmable controller (6) exhibiting deterministic behaviour and being provided to produce at least one first result value (13) from at least one first input value (3, 4, 5),
**characterised in that**
means for affective control (7) are provided, which are provided to produce at least one state value (9) by means of situation evaluation from at least one second input value (1, 2) and for linking the state value (9) to an attribute profile (10) in order to form a second result value (11), the connecting means (14) being provided to link the first result value (13) to the second result value (11) in order to produce at least one output value (15).

2. Automation system according to claim 1,
**characterised in that**
the state value (9), which is produced by way of a current situation evaluation based on empirical values, describes the attribute of an emotion.

3. Automation system according to claim 1 or 2,
**characterised in that**
the attribute profile (10) represents attributes, in particular character attributes of the automation system, by weighting the state values.

4. Automation system according to one of the preceding claims,
**characterised in that,**
one or more second input values (1, 2) are identical to at least one and/or more first input values (3, 4, 5).

5. Automation system according to one of the preceding claims,
**characterised in that**
the input values (31, 41), the state values (33), the result values (35, 43) and/or the output values (37) can each be represented as vectors.

6. Automation system according to one of the preceding claims,
**characterised in that**
the situation evaluation means are implemented as situation evaluation matrices (32).

7. Automation system according to one of the preceding claims,
**characterised in that**
the attribute profile can be represented as an attribute matrix (34).

8. Automation system according to one of the preceding claims,
**characterised in that**
the situation evaluation means (8) and/or the attribute profile (10) contains non-linear functions.

9. Automation system according to one of the preceding claims,
**characterised in that,**
the second result value (11, 35) can be superimposed onto the first result value (13, 43) in order to form the at least one output value (15, 37).

10. Automation system according to one of the preceding claims, **characterised in that**
the means for affective control (7) serve to monitor the programmable controller (6).

11. Automation system according to one of the preceding claims,
**characterised in that**
the attribute profile (10) can be created with an engineering system.

12. Automation system according to one of the preceding claims,
**characterised in that**

the attribute profile (10) can be influenced by a learning process.

**13.** Automation system according to one of the preceding claims,
**characterised in that**
the attribute profile (10) can be stored and transmitted to other automation systems.

**14.** System with a number of interactive automation systems according to one of the preceding claims, with which at least one part of the automation system has different characteristic profiles (10).

**15.** Method for controlling a technical process or a technical system, with which method at least one first result value (13) is produced from at least one first input value (3, 4, 5) with a programmable controller (6) of an automation system exhibiting deterministic behaviour,
**characterised in that,**
with means for affective control (7), at least one state value (9) is produced from at least one second input value (1, 2) and with situation evaluation means (8), the state value (9) is linked to an attribute profile (10) in order to form a second result value (11), the first result value (13) being linked to the second result value (11), the linkage means allowing the first result value (13) to be connected to the second result value (11) in order to form at least one output value (15).

**16.** Method according to claim 15,
**characterised in that**
the state value (9), which is formed by way of a current situation evaluation based on empirical values, describes the characteristics of an emotion.

**17.** Method according to claim 16 or 17,
**characterised in that,**
the attribute profile (10) represents attributes, in particular character attributes of the automation system by means of weighting the state value.

**18.** Method according to one of claims 15 to 17,
**characterised in that**
one or more second input values (1, 2) are identical to at least one and/or more first input values (3, 4, 5).

**19.** Method according to one of claims 15 to 18,
**characterised in that**
the input values (31, 41), the state values (33), the result values (35, 43) and/or the output values (37) can each be displayed as a vector.

**20.** Method according to one of claims 15 to 19,
**characterised in that**
the situation evaluation means are implemented as situation evaluation matrices (32).

**21.** Method according to one of claims 15 to 20,
**characterised in that**
the attribute profile is represented as an attribute matrix (34).

**22.** Method according to one of claims 15 to 21,
**characterised in that**
the situation evaluation means (8) and/or the attribute profile (10) contain non-linear functions.

**23.** Method according to one of claims 15 to 22,
**characterised in that**
the second result value (11, 35) is superimposed onto the first result value (13, 43) in order to form the at least one output value (15, 37).

**24.** Method according to one of claims 15 to 23,
**characterised in that**
the means for affective control (7) monitor the programmable controller (6).

**25.** Method according to one of claims 15 to 24,
**characterised in that**
the attribute profile (10) is created with an engineering system.

**26.** Method according to one of claims 15 to 25,
**characterised in that**
the attribute profile (10) is influenced by a learning process.

**27.** Method according to one of claims 15 to 26,
**characterised in that**
the attribute profile (10) is stored and transmitted to other automation systems.

**Revendications**

**1.** Système d'automatisation comprenant une commande par programme enregistrable (6), la commande par programme enregistrable (6) présentant un comportement déterministe et étant prévue pour la formation d'au moins une première valeur de résultat (13) à partir d'au moins une première valeur d'entrée (3, 4, 5),
**caractérisé en ce**
**que** des moyens sont ménagés pour la commande affective (7), qui sont prévus pour former au moins une valeur d'état (9) à partir d'au moins une seconde valeur d'entrée (1, 2) à l'aide de moyens d'évaluation de situation (8) et pour combiner la valeur d'état (9) à un profil de caractère (10) pour la formation d'une seconde valeur de résultat (11), des moyens de liaison (14) étant ménagés pour combiner la première valeur de résultat (13) à la seconde valeur de résultat (11) pour la formation d'au moins une valeur de sortie (15).

**2.** Système d'automatisation selon la revendication 1,
**caractérisé en ce**
**que** la valeur d'état (9), formée par l'intermédiaire d'une évaluation de situation actuelle basée sur des valeurs empiriques, décrit l'expression d'un sentiment.

**3.** Système d'automatisation selon la revendication 1 ou 2,
**caractérisé en ce**
**que** le profil de caractère (10) représente des attributs, notamment des traits de caractère du système d'automatisation, par pondération des valeurs d'état (9).

**4.** Système d'automatisation selon l'une quelconque des revendications précédentes,
**caractérisé en ce**
**qu'**une ou plusieurs secondes valeurs d'entrée (1, 2) sont identiques à au moins une resp. plusieurs premières valeurs d'entrée (3, 4, 5).

**5.** Système d'automatisation selon l'une quelconque des revendications précédentes,
**caractérisé en ce**
**que** les valeurs d'entrée (31, 41), les valeurs d'état (33), les valeurs de résultat (35, 43) et/ou les valeurs de sortie (37) peuvent être respectivement représentées comme vecteur.

**6.** Système d'automatisation selon l'une quelconque des revendications précédentes,
**caractérisé en ce**
**que** les moyens d'évaluation de situation sont exécutés en tant que matrice d'évaluation de situation (32).

**7.** Système d'automatisation selon l'une quelconque des revendications précédentes,
**caractérisé en ce**
**que** le profil de caractère peut être représenté en tant que matrice de caractère (34).

**8.** Système d'automatisation selon l'une quelconque des revendications précédentes,
**caractérisé en ce**
**que** les moyens d'évaluation de situation (8) et/ou le profil de caractère (10) contiennent des fonctions non linéaires.

**9.** Système d'automatisation selon l'une quelconque des revendications précédentes,

**caractérisé en ce**
**que** la seconde valeur de résultat (11, 35) est superposable à la première valeur de résultat (13, 43) pour la formation de l'au moins une valeur de sortie (15, 37).

**10.** Système d'automatisation selon l'une quelconque des revendications précédentes,
**caractérisé en ce**
**que** les moyens pour la commande affective (7) servent au contrôle de la commande par programme enregistrable (6).

**11.** Système d'automatisation selon l'une quelconque des revendications précédentes,
**caractérisé en ce**
**que** le profil de caractère (10) peut être établi à l'aide d'un système d'ingénierie.

**12.** Système d'automatisation selon l'une quelconque des revendications précédentes,
**caractérisé en ce**
**que** le profil de caractère (10) est influençable par un processus d'apprentissage.

**13.** Système d'automatisation selon l'une quelconque des revendications précédentes,
**caractérisé en ce**
**que** le profil de caractère (10) est mémorisable et transmissible sur d'autres systèmes d'automatisation.

**14.** Système comprenant plusieurs systèmes d'automatisation agissant ensemble selon l'une quelconque des revendications précédentes, au moins une partie des systèmes d'automatisation présentant différents profils de caractère (10).

**15.** Procédé de commande d'un processus technique ou d'une installation technique, dans lequel procédé au moins une première valeur de résultat (13) est formée à partir d'au moins une première valeur d'entrée (3, 4, 5) à l'aide d'une commande par programme enregistrable (6) d'un système d'automatisation présentant un comportement déterministe,
**caractérisé en ce**
**qu'**à l'aide de moyens pour la commande affective (7), au moins une valeur d'état (9) est formée à partir d'au moins une seconde valeur d'entrée (1, 2) et en ce qu'à l'aide de moyens d'évaluation de situation (8), la valeur d'état (9) est combinée à un profil de caractère (10) pour la formation d'une seconde valeur de résultat (11), la première valeur de résultat (13) étant combinée à la seconde valeur de résultat (11) à l'aide de moyens de liaison (14) pour la formation d'au moins une valeur de sortie (13).

**16.** Procédé selon la revendication 15,
**caractérisé en ce**
**que** la valeur d'état (9), formée par l'intermédiaire d'une évaluation de situation actuelle basée sur des valeurs empiriques, décrit l'expression d'un sentiment.

**17.** Procédé selon la revendication 16 ou 17,
**caractérisé en ce**
**que** le profil de caractère (10) représente des attributs, notamment des traits de caractère du système d'automatisation, par pondération des valeurs d'état (9).

**18.** Procédé selon l'une quelconque des revendications 15 à 17,
**caractérisé en ce**
**qu'**une ou plusieurs secondes valeurs d'entrée (1, 2) sont identiques à au moins une resp. plusieurs premières valeurs d'entrée (3, 4, 5).

**19.** Procédé selon l'une quelconque des revendications 15 à 18,
**caractérisé en ce**
**que** les valeurs d'entrée (31, 41), les valeurs d'état (33), les valeurs de résultat (35, 43) et/ou les valeurs de sortie (37) sont respectivement représentées comme vecteur.

**20.** Procédé selon l'une quelconque des revendications 15 à 19,
**caractérisé en ce**

**que** les moyens d'évaluation de situation sont exécutés en tant que matrice d'évaluation de situation (32).

21. Procédé selon l'une quelconque des revendications 15 à 20,
    **caractérisé en ce**
    **que** le profil de caractère est représenté en tant que matrice de caractère (34).

22. Procédé selon l'une quelconque des revendications 15 à 21,
    **caractérisé en ce**
    **que** les moyens d'évaluation de situation (8) et/ou le profil de caractère (10) contiennent des fonctions non linéaires.

23. Procédé selon l'une quelconque des revendications 15 à 22,
    **caractérisé en ce**
    **que** la seconde valeur de résultat (11, 35) est superposée à la première valeur de résultat (13, 43) pour la formation de l'au moins une valeur de sortie (15, 37).

24. Procédé selon l'une quelconque des revendications 15 à 23,
    **caractérisé en ce**
    **que** les moyens pour la commande affective (7) contrôlent la commande par programme enregistrable (6).

25. Procédé selon l'une quelconque des revendications 15 à 24,
    **caractérisé en ce**
    **que** le profil de caractère (10) est établi à l'aide d'un système d'ingénierie.

26. Procédé selon l'une quelconque des revendications 15 à 25,
    **caractérisé en ce**
    **que** le profil de caractère (10) est influencé par un processus d'apprentissage.

27. Procédé selon l'une quelconque des revendications 15 à 26,
    **caractérisé en ce**
    **que** le profil de caractère (10) est mémorisé et transmis sur d'autres systèmes d'automatisation.

FIG 1

# FIG 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19857683 A1

**In der Beschreibung aufgeführte Nicht-Patentliteratur**

- **L. CUSTÓDIO.** *Artificial Emotions and Emotion-Based Control Systems,* 18. Oktober 1999, vol. 2, 1415-1420